# EUROPÄISCHE PATENTSCHRIFT

(11) **EP 2 201 261 B1**
(45) Veröffentlichungstag und Bekanntmachung des Hinweises auf die Patenterteilung: **21.12.2016**
(21) Anmeldenummer: 08804149.6
(22) Anmeldetag: 12.09.2008
(51) Int. Cl.: F16F 1/373, F16F 1/376

(54) **ZUSATZFEDER MIT AXIAL VERLAUFENDEN KONTURELEMENTEN**
AUXILIARY SPRING HAVING AXIALLY RUNNING CONTOUR ELEMENTS
RESSORT COMPLÉMENTAIRE À ÉLÉMENTS DE CONTOUR S'ENCHAÎNANT AXIALEMENT

(30) Priorität: 14.09.2007 EP 07116443
(43) Veröffentlichungstag der Anmeldung: 30.06.2010
(73) Patentinhaber: BASF SE, 67056 Ludwigshafen am Rhein (DE)
(72) Erfinder: THYE-MOORMANN, Frank, 49459 Lembruch (DE)
(74) Vertreter: BASF IP Association
(86) Internationale Anmeldenummer: PCT/EP2008/062187
(87) Internationale Veröffentlichungsnummer: WO 2009/037207

(56) Entgegenhaltungen:
- DE-U1- 20 109 926
- DE-U1- 20 313 895
- DE-U1-202004 000 620
- DE-U1-202004 008 055
- DE-U1-202005 012 531

## Beschreibung

Die Erfindung betrifft ein Federelement auf der Basis von elastischem Material.

Federungselemente werden in Automobilen beispielsweise innerhalb des Fahrwerks verwendet und sind allgemein bekannt. Sie werden insbesondere als schwingungsdämpfende Federelemente eingesetzt. Fast immer werden neben dem Hauptstoßdämpfer, der häufig auf der Basis von Metallfedern und/oder Druckgaselementen basiert noch weitere Federelemente (Zusatzstoßdämpfer), bevorzugt aus elastischem Material eingesetzt. Üblicherweise sind diese Federelemente Hohlkörper, die konzentrische geformt sind und entlang der Federachse unterschiedliche Durchmesser und/oder Wandstärken aufweisen . Grundsätzlich könnten diese Federelemente auch als Hauptstoßdämpfer fungieren, sie übernehmen aber in Kombination mit dem Hauptstoßdämpfer häufig eine Endanschlagfunktion. Dabei beeinflussen sie die Kraft-Weg-Kennung des gefederten Rades durch das Ausbilden oder Verstärken einer progressiven Charakteristik der Fahrzeugfederung. So können die Nickeffekte des Fahrzeuges reduziert und die Wankabstützung verstärkt werden. Insbesondere durch die geometrische Gestaltung wird die Anlaufsteifigkeit optimiert, dies hat maßgeblichen Einfluss auf den Federungskomfort des Fahrzeuges. Durch diese Funktion wird der Fahrkomfort erhöht und ein Höchstmaß an Fahrsicherheit gewährleistet. Durch die gezielte Auslegung der Geometrie ergeben sich über der Lebensdauer nahezu konstante Bauteileigenschaften.

DE 203 13 895 U1 beschreibt beispielsweise eine gattungsgemässe Zusatzfeder, die durch Erhebungen im oberen Teil besonders gut in den zur Verfügung stehenden Bauraum positioniert werden kann und dadurch gleichzeitig hinsichtlich Seitenstabilität und Führung optimiert wurde.

Eine Schwierigkeit in der dreidimensionalen Ausgestaltung der Zusatzfedern besteht in einem häufig gewünschten, besonders weichen Einsatz der Kraftaufnahme, was auch als weicher Anlauf des Federelementes bezeichnet wird. Um einen derartigen weichen Anlauf zu erreichen, werden z.B. in der Offenlegungsschrift DE 102004049638 umlaufende Biegelippen beschrieben, die auch als "Blütenform" bezeichnet wird. Der Ausdehnung der Biegelippe sind aber durch die Geometrie der Zusatzfeder Grenzen gesetzt, so dass auch der weiche Anlauf nur in sehr engen Grenzen variiert werden kann. Auch ist diese Formgebung mit einer Biegelippe für besonders hohe Belastungen nur bedingt geeignet. Weiterhin weist die Biegelippe in der Herstellung, die überwiegend im Schäumverfahren erfolgt, wesentliche Nachteile auf. Der Hohlraum des Federelementes wird beim Gießvorgang üblicherweise durch einen Kern definiert, von dem das Federelement nach der Aushärtung gezogen werden muss. Die dabei auftretenden Belastungen der eng anliegenden Biegelippe, führen zu einem nicht unwesentlichen Ausschuss. Ein weiterer Dachteil besteht in dem aufwändigen Entgraten der mit dem der Fertigung der Biegelippe einhergeht.

Eine weitere bekannte Form, die verwendet wird, besteht in der Ausgestaltung des Randes in Form einer Welle, d.h. mit variabler Länge des Federelementes in axialer Richtung. Auch dieser Ausformung der Federelemente sind sehr enge Grenzen gesetzt, da die Länge des Federelementes in axialer Richtung nur in engen Grenzen variiert werden kann, da sonst die spitz zulaufenden Enden leicht in radialer Richtung, bezogen auf die Dämpfungsachse, verformt werden können und so die Kraft nicht mehr reproduzierbar aufnehmen.

Aufgabe der vorliegenden Erfindung war es somit, für ein Federelement, bevorzugt als Zusatzfeder in einem Automobilfahrwerk, eine dreidimensionale Form zu entwickeln, die einen möglichst weichen Einsatz ermöglicht und über erhöhte Stabilität und verbesserte Eigenschaften in der Fertigung verfügt.

Diese Anforderungen werden überraschenderweise durch ein Federelement (i) aus mindestens einem Elastomer erfüllt, das eine Zusatzfeder in einem Automobilfahrwerk ist, mit einem dickeren Teil, das dem oberen Ende 0 des Federelelemtes zugewandt ist und einem dünneren Teil, das dem unteren Ende U des Federelementes (i) zugewandt ist, dessen entlang der Federachse (ii) konzentrische Grundgeometrie entlang der Federachse achsensymmetrische Verjüngungen und/oder Erweiterungen umfasst und diese sich bei radialer Aufsicht auf dem dünneren Teil des Federelementes (i) befinden.

Die Erfindung umfasst weiterhin Stoßdämpfer, die ein erfindungsgemäßes Federelement enthalten, bei denen in einer bevorzugten Ausführungsform dieses Federelement auf der Kolbenstange des Stoßdämpfers positioniert ist und die Kolbenstange in einer weiter bevorzugten Ausführungsform in der Achse des hohlen Federelementes positioniert ist.

Des Weiteren bezieht sich die Erfindung auf Automobile, beispielsweise Personenkraftfahrzeuge, Lastkraftwagen, Busse und sonstige Fahrzeuge oder sonstige Vorrichtungen in die das erfindungsgemäße Federelement eingebaut ist.

Die Vorteile eines derartigen Federelementes sind vielfältig. Auf der Basis eines bestehenden Federelementes lässt sich durch die unterschiedlichste Formgebung der Verjüngungen des Materials in axialer Richtung praktisch jeder gewünschter Anlauf der Kraftaufnahme einstellen. Dadurch dass die Verjüngungen im weitesten Sinne parallel zur Bewegungsachse des üblicherweise konzentrischen Federelementes angeordnet sind, erhalten die erfindungsgemäßen Federelemente, wie aus der Skelettbauweise bekannt (Krane, Telegraphenmasten etc.) eine höhere Stabilität verglichen mit einem Federelement, das einen vergleichbaren Anlauf der Kraftaufnahme durch konzentrisch gleichmäßige Verjüngung des Federelementes zu erreichen sucht. Zudem ist die Verjüngung der Wandstärke eines Federelementes, das in der Praxis üblicherweise durch Schäumen hergestellt wird, durch die Viskosität des Gießmaterials nach unten beschränkt. Bei den erfindungsgemäßen Federelementen ermöglichen die dickeren Bereiche ein schnelleres Befüllen mit Elastomer, das üblicherweise aus einer der axialen Öffnungen des Federelementes (=Hohlkörper) erfolgt. Die dickeren Bereiche fungieren beim Gießen wie Füllkanäle in die mehr Elastomer pro Zeiteinheit gegossen werden kann. Aus diesen dickeren "Füllkanälen" können dann auch die verjüngten Bereiche leichter befüllt werden, verglichen mit einer Formgebung, bei der die Verjüngung des Formkörpers 360° umfasst.

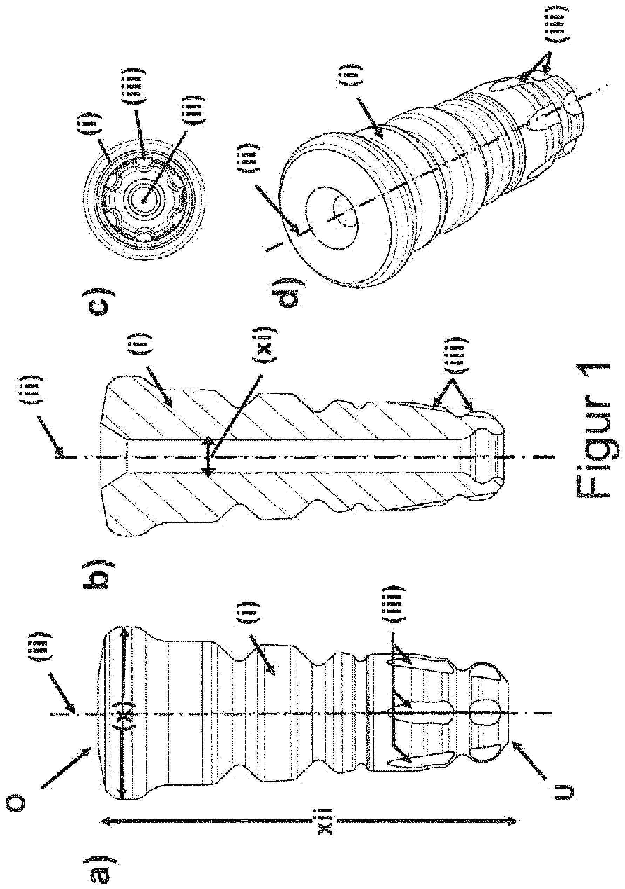

Die Figur 1 zeigt ein Federelement (i) bestehend aus einem Hohlkörper, der im wesentlichen konzentrisch ist, d.h. dessen Grundgeometrie konzentrisch ist und seitlich mit Konturelementen (iii) versehen ist, die in diesem Fall Verjüngungen des Hohlkörpers darstellen. Figur 1 a, zeigt die Seitenansicht, Figur 1 b zeigt den Querschnitt in radialer Aufsicht, Figur 1c zeigt einen Querschnitt in axialer Aufsicht und Figur 1 d zeigt eine perspektivische Darstellung des Federelementes (i) mit einem oberen Ende O und einem unteren Ende U. Dargestellt sind ein hohles Federelement (i), mit einer Federachse (ii), Konturelementen (iii), mit einer Höhe (xii), einem Außendurchmesser (x) und einem Innendurchmesser (xi).

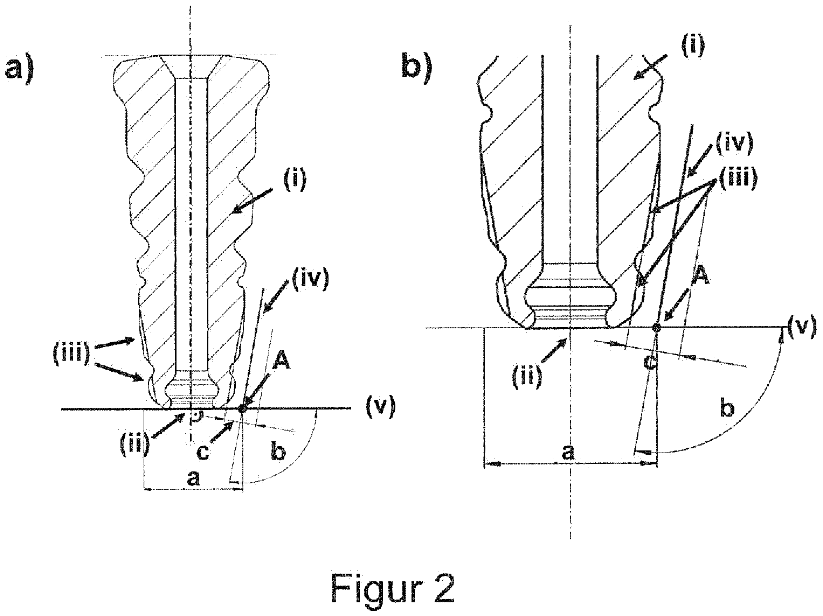

Die Figur 2 zeigt einen Schnitt durch ein Federelement (i), das einen konzentrischen Hohlkörper darstellt, dessen Innen- und Außendurchmesser entlang der Federachse (ii) variieren und in den im unteren Drittel achsensymmetrisch wenigstens zwei Konturelemente (iii), hier Verjüngungen angebracht sind, die für einen weichen Anlauf des Federelementes sorgen. Figur 2a zeigt das gesamte Federelement, Figur 2b zeigt eine Teilvergrößerung. Dabei wird das Konturelement (iii), eine Verjüngung, dadurch definiert, dass es sich in der Ansicht am unteren Ende des Federelementes befindet. Die Verjüngung wird in dieser Ausführungsform definiert durch einen Zylinder mit dem Durchmesser c, dessen Mittelachse (iv) sich mit der Senkrechten (v) zur Federachse (ii) im Punkt A schneidet. Der Schnittpunkt ist a/2 von der Federachse entfernt und schießt mit der Senkrechten (iv) einen Winkel b ein. Die Entfernung der Schnittpunkte zweier achsensymmetrisch gegenüberliegenden Schnittpunkten A wird mit a bereichnet. Hierdurch wird die Lage der achsensymmetrischen Verjüngungen beschrieben. Der Winkel b wird so gewählt, dass die Verjüngung den gewünschten weichen Anlauf ermöglicht, sie ist in einer bevorzugten Ausführungsform parallel zur Oberfläche des Federelementes, Die Darstellung zeigt wie ein bevorzugtes Konturelement sehr einfach definiert und daher einfach und reproduzierbar hergestellt werden kann. Die Konturelemente befinden sich jeweils achsensymmetrisch, paarweise auf der sonst im wesentlichen konzentrischen Grundgeometrie des Federelementes (i).

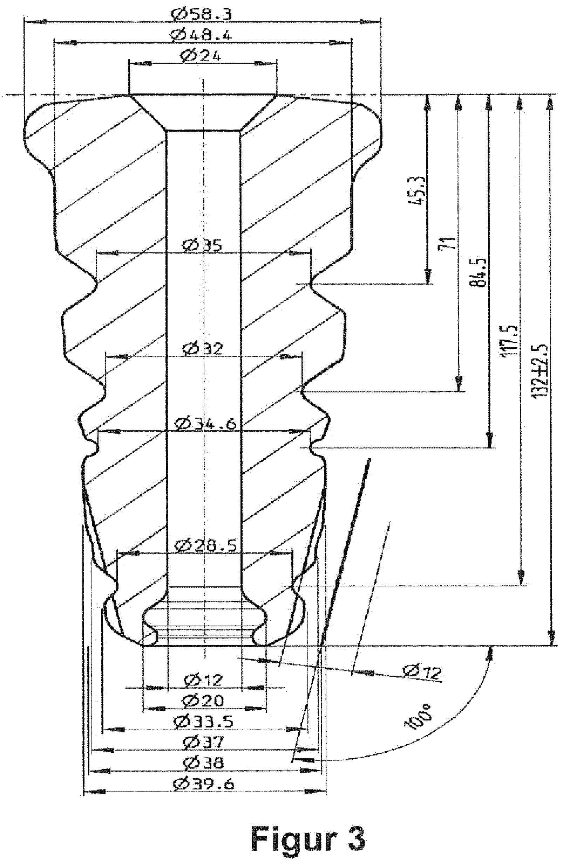

Figur 3 zeigt einen Schnitt durch ein bevorzugtes Federelement, bei dem die geometrischen Daten dargestellt sind und das in seinem unteren Drittel 6 jeweils, paarweise achsensymmetrische Konturelemente enthält. Die in der Figur 3 Durchmesser in der Reihenfolge von oben nach unten sind: 58.3 mm, 48.4 mm, 24 mm, 35 mm, 32 mm, 34,6 mm, 28,5 mm, 12 mm, 20 mm, 33.5 mm, 37 mm, 38 mm, 39.6 mm. Der Winkel (b) zum Konturelement beträgt 100°. Der Durchmesser (c) dieses die Kontur erzeugenden Zylinders ist 12 mm. Außenmaße des Federelementes in der Darstellung rechts neben dem Federelement, von innen nach außen: 45.3 mm, 71 mm, 84.5 mm, 117.5 mm, 132 +/- 2.5 mm.
Die Maße sind beispielhaft und können entsprechend der Anforderung einzelner Federelemente in einzelnen Ausführungsformen stark variieren. In weiteren bevorzugten Ausführungsformen bleiben die Verhältnisse der genannten Maße zueinander bei Änderung der Größe gleich.

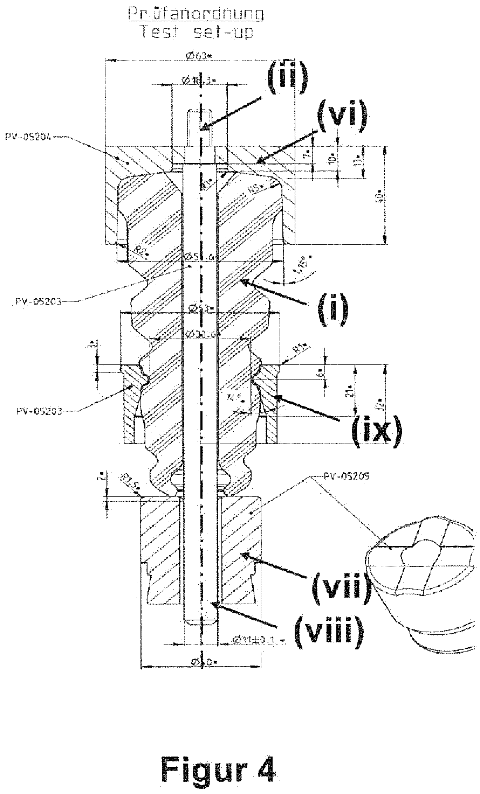

Die Figur 4 bildet den Prüfaufbau ab, der für die Bestimmung der Kennlinie des Federelementes (i) verwendet wird. Die Vorrichtung umfasst einen Stütztopf (vii), eine Kolbenstange (viii), ein Federelement (i) mit einer Federachse (ii), ein Schutzrohr (ix) und eine Dämpferkappe (vi). Die Zusatzfeder wird axial, d.h. entlang der Federachse, belastet und dabei eine Kraft-Weg-Kennlinie aufgenommen.

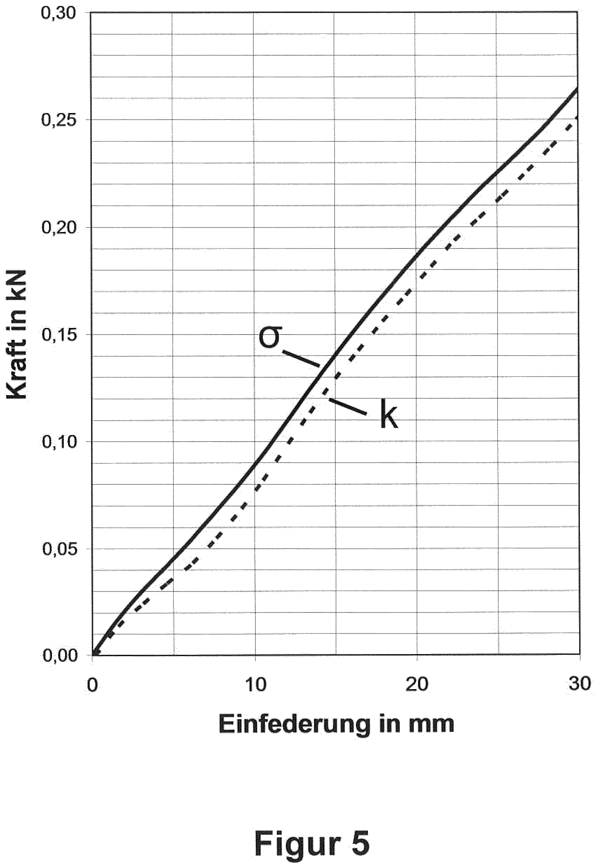

Figur 5 zeigt das Ergebnis der Aufzeichnung einer Kraft-Weg-Kennlinie wie sie mit der unter Figur 4 beschriebenen Apparatur aufgenommen wurde. In y- Richtung ist die Kraft in kN zwischen 0 kN und 0.3 kN aufgetragen, in x-Richtung ist die Einfederung des Federelementes in der Einheit [mm] zwischen 0 mm und 30 mm dargestellt. Die Kennlinie (k) beschreibt das in Figur 3 dargestellte Federelement, die Kennlinie (o) beschreibt ein Federelements, das sich von dem in Figur 3 beschriebenen Federelement ausschließlich durch das Fehlen der Konturelemente (iii) unterscheidet. Beide Federelemente waren aus einem Polyisocyanat-Polyadditionsprodukt, Celasto L mit einer Dichte RD von 45 hergestellt worden. Bei dieser Messung zeigt sich, dass die zusätzlich eingebrachten Konturelemente (iii) (Verjüngungen bzw. Rillen), zu einer deutlichen Reduzierung der Anlaufsteifigkeit führen, ohne dass sich die geforderte Resthöhe der Zusatzfeder (Blockmaß) bei der maximalen Belastung von 12 kN stark verringert. Das Blockmaß gibt die Länge des komprimierten Federelementes an und betrug im vorliegenden Fall jeweils 36 mm. Dargestellt ist der Anlaufbereich, bei dem die Belastung von 0 auf 0.3 kN ansteigt.

Somit ist dieses neue Designelement eine wirkungsvolles Hilfsmittel, um einen weichen Anlauf, das heißt großer Federweg bei geringer Kraft (Kontakt), zu ermöglichen.

Die Maße können entsprechend der Anforderung einzelner Federelemente in Einzelfällen stark variieren. In bevorzugten Ausführungsformen bleiben die Verhältnisse der genannten Maße zueinander bei Änderung der Größe gleich.

Das erfindungsgemäße Federelement (i) besteht aus mindestens einem Elastomer und hat eine konzentrische Grundgeometrie, unterbrochen durch die erfindungsgemäßen, axial verlaufenden Konturelemente. Konzentrische Geometrie bedeutet, dass das Federelement (i) kreisrund um die Federachse (ii) geformt ist, wobei die Durchmesser (x) der entsprechenden Kreise entlang der Federachse (ii) variieren können. Zum Umfang der Erfindung gehören vollvolumige Federelemente aber auch Federelemente, die ein Hohlkörper darstellen, wie er beispielsweise in Figur 1 dargestellt ist. Ein Federelement, das einen Hohlkörper darstellt, ist nicht, wie das vollvolumige Federelement nur durch den Durchmesser (x), der gleichzeitig Außendurchmesser (x) ist, gekennzeichnet, sondern im Inneren durch den Innendurchmesser (xi) begrenzt, so dass sich zwischen der Federachse und dem Innendurchmesser entlang der Federachse (ii) kein Elastomer befindet. In bevorzugten Ausführungsformen variiert der Innendurchmesser, der Außendurchmesser oder beide Durchmesser entlang der Federachse, um den jeweils besonderen Anforderungen an die Federkennung zu entsprechen.

Erfindungsgemäß befinden sich entlang bzw. in Hauptrichtung der Federachse (ii) des Federelements (i) Verjüngungen (iii) oder Erweiterungen, die die Form des ansonsten konzentrisch aufgebauten Federelementes unterbrechen. Auf diese Eigenschaft wird auch durch den Ausdruck "im wesentlichen entlang der Federachse konzentrische Geometrie" Bezug genommen. Ist an einer Stelle weniger Elastomer als in der konzentrischen Bezugsform, so stellt dies eine Verjüngung des Federelementes (i) dar, trägt eine Stelle zusätzliches Elastomer, so ist dies eine Erweiterung des Federelementes. Die Verjüngungen oder Erweiterungen werden zusammenfassend auch als Konturelemente angesprochen. Bei einem Federelement, das ein Hohlkörper darstellt, können die Konturelemente (iii) von innen, von außen oder von innen und außen die konzentrische Grundfigur des Federelementes (i) unterbrechen., Bei einem vollvolumigen Federelement können die Konturelemente natürlich nur von außen angebracht sein. Um die Stabilität des Federelementes zu gewährleisten, müssen diese Verjüngungen (iii) und/oder Erweiterungen (iii) achsensymmetrisch zur Federachse liegen. Bei der konzentrischen Grundform liegt also um 180° um die Federachse gedreht jeweils dasselbe Konturelement (iii) vor. Zieht man eine Gerade (d) durch die längste Ausdehnung eines Konturelementes, so ist diese Gerade in einer bevorzugten Ausführungsform von radial bezüglich der Federachse (ii) betrachtet, parallel zu dieser. Die Gerade durch die längste Ausdehnung kann aber auch einen Winkel mit der Federachse (ii) einschließen (d'). In bevorzugten Ausführungsformen liegt dieser Winkel e zwischen 0° und 45°. Bei weiter bevorzugten Ausführungsformen liegt dieser Winkel e zwischen 0° und 1°, 1° und 5°, 5° und 15°, 15° und 30°, 30° und 45°. Besonders bevorzugt sind 0°, 22,5° und 45°.

In bevorzugten Ausführungsformen kommen die Konturelemente (iii) auf einem im wesentlichen konzentrischen Federelement 2-fach, 4-fach, 6-fach, 8-fach, 10-fach 12-fach oder in jeder durch 2 teilbaren Anzahl vor. Dabei können diese Konturelemente (iii) dieselbe oder auch unterschiedliche Form haben, wobei jeweils zwei um 180 ° in axialer Aufsicht gegenüberliegende Konturelemente in bevorzugten Ausführungsformen jeweils gleiche Formen aufweisen. Der Versatz zwischen jeweils zwei zueinander gehörenden achsensymmetrischen Konturelementen kann gleichmäßig oder ungleichmäßig in jedem beliebigen Winkel sein. In einer bevorzugten Ausführungsform sind die Konturelemente jedoch gleichmäßig in axialer Aufsicht auf 360° verteilt.

Über die Ausformung der Konturelemente (iii) wird die Federcharakteristik des Federelementes (i) beeinflusst. In einer bevorzugten Ausführungsform wird das Konturelement (iii) verwendet, um einen weichen Anlauf des Federelementes (i) zu erreichen. Die Konturelemente sind dann bevorzugt entlang der in radialer Aufsicht dünneren Teile des Federelementes positioniert. In einer weiter bevorzugten Ausführungsform befinden sie sich bei radialer Aufsicht im ersten und/oder letzten Drittel des Federelementes, d.h. die Konturelemente befinden sich entweder nur in dem Drittel, das dem oberen Ende O des Federelementes zugewandt ist (erstes Drittel), oder nur in dem Drittel, das dem unteren Ende U des Federelementes zugewandt ist (letztes Drittel), oder sowohl in dem ersten als auch in dem letzten Drittel. In anderen bevorzugten Ausführungsformen sind die Strukturelemente entlang der gesamten Federachse enthalten. In weiteren Ausführungsformen sind mehre Konturelemente auf dem Federelement kombiniert. In einer besonders bevorzugten Ausführungsform befinden sich mindestens zwei achsensymmetrische Konturelemente im unteren bzw. letzten und/oder oberen, d.h. ersten Drittel des Federelementes (i) angebracht, wobei dies besonders bevorzugt 6 oder 8 bei axialer Aufsicht gleichmäßig verteilte Konturelemente sind.

In einer bevorzugten Ausführungsform sind die Konturelemente parallel zur Oberfläche angeordnet. Verjüngungen des Federelementes kann man auch als Einkerbungen, Einfräsungen oder Aussparungen bezeichnen. Die Konturelemente können in radialer Aufsicht rechteckig, elliptisch, trapezförmig, dreieckig sein oder aus beliebigen Kombinationen dieser Grundformen zusammengesetzt sein. In einigen Ausführungsformen stellen die Konturelemente (iii) eine gleichmäßige Verjüngung und/ oder Erweiterung der konzentrische Grundform des Federelementes (i) dar, in anderen Ausführungsformen variiert die Verjüngung (iii) und/oder Erweiterung (iii) entlang der Federachse (ii). Auch diese Variation der Konturelemente (iii) steht in direktem Zusammenhang mit der Federcharakteristik des Federelementes und ist den jeweiligen Anforderungen anzupassen und ermöglicht bei vorgegebener Geometrie des Federelementes vorteilhafte Dämpfungseigenschaften.

Das Federelement kann für Zusatzfedern allgemein übliche Maße, d.h. Längen und Durchmesser annehmen. Bevorzugt weist das Federelement (i) eine Höhe (xii) zwischen 30 mm und 200 mm, besonders bevorzugt zwischen 40 mm und 120 mm auf. Bevorzugt beträgt der äußere Durchmesser (x) des Federelementes (i) zwischen 30 mm und 100 mm, besonders bevorzugt zwischen 40 mm und 70 mm. Bevorzugt ist der Innendurchmesser (xi) des Hohlraums des Federelementes (i) zwischen 10 mm und 30 mm.

In einer bevorzugten Ausführungsform basieren die erfindungsgemäßen Federelemente (i) auf allgemein bekannten Elastomeren, wie beispielsweise Gummi oder Polyisocyanat-Polyadditionsprodukte. Dabei kann ein Federelement aus einem Elastomer bestehen, es kann aber auch aus mehreren Elastomeren bestehen, die schichtweise, schalenförmig oder in anderer Form, bzw. auch in Mischung miteinander vorliegen. Die Polyisocyanat-Polyadditionsprodukte sind bevorzugt auf der Basis von zelligen Poly-urethanelastomeren aufgebaut, die ggf. Polyharnstoffstrukturen enthalten können. Besonders bevorzugt sind zelligen Polyurethanelastomere, die in einer bevorzugten Ausführungsform eine Dichte nach DIN 53 420 von 200 kg/m³ bis 1100 kg/m³, bevorzugt 300 kg/m³ bis 800 kg/m³, eine Zugfestigkeit nach DIN 53571 von 2 N/mm², bevorzugt 2 N/mm² bis 8 N/mm², eine Dehnung nach DIN 53571 von 300 %, bevorzugt 300 % bis 700 % und eine Weiterreißfestigkeit nach DIN 53515 von bevorzugt 8 N/mm bis 25 N/mm haben.

Die erfindungsgemäßen Federelemente (i) basieren bevorzugt auf Elastomeren auf der Basis von Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm Ein weiteres Element der Erfindung ist ein Stoßdämpfer, der mindestens eines der erfindungsgemäßen Federelemente enthält. Das erfindungsgemäße Federelement kann für sich alleine in einer geeigneten Vorrichtung als Stoßdämpfer verwendet werden. Häufig wird das Federelement aber mit herkömmlichen Feder und oder Dämpfungselementen kombiniert. Dabei werden bevorzugt Federelemente, die Hohlkörper sind verwendet, die so positioniert werden, dass sich ihre Federachse mit dem Federachse zur Deckung kommt.

Weiterhin umfasst die Erfindung Vorrichtungen und Fahrzeuge, die ein erfindungsgemäßes Federelement enthalten.

Ein weiteres Element der Erfindung ist ein Stoßdämpfer, der mindestens eines der erfindungsgemäßen Federelemente enthält. Das erfindungsgemäße Federelement kann für sich alleine in einer geeigneten Vorrichtung als Stoßdämpfer verwendet werden. Häufig wird das Federelement aber mit herkömmlichen Federn und oder Dämpfungselementen kombiniert. Dabei werden bevorzugt Federelemente, die Hohlkörper sind, verwendet, die so positioniert werden, dass ihre Achse mit der Federachse zur Deckung kommt.

Weiterhin umfasst die Erfindung Vorrichtungen und Fahrzeuge die ein erfindungsgemäßes Federelement enthalten

Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Konturelemente werden in einer Ausführungsform direkt in das Gießwerkzeug integriert, in einer weiteren Ausführungsform werden sie nachträglich in den konzentrischen Grundkörper eingearbeitet. In einer bevorzugten Ausführungsform wird das konzentrische Federelement hierzu bis zur Verfestigung gekühlt, bevorzugt mit flüssigem Stickstoff und in diesem Zustand bearbeitet.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40°C bis 95°C, bevorzugt 50 °C bis 90 °C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dicht schließendes Formwerkzeug gebracht werden.

Die Formteile sind nach 5 Minuten bis 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem "one shot"-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

## Patentansprüche

1. Federelement (i), das eine Zusatzfeder in einem Automobilfahrwerk ist, mit einem dickeren Teil, das dem oberen Ende O des Federelementes zugewandt ist und einem dünneren Teil, das dem unteren Ende U des Federelementes (i) zugewandt ist, mit im wesentlichen entlang der Federachse (ii) konzentrischer Geometrie, bestehend aus mindestens einem Elastomer, **dadurch gekennzeichnet, dass** die um die Federachse (ii) im wesentlichen konzentrische Geometrie entlang der Federachse achsensymmetrisch Verjüngungen und/oder Erweiterungen umfasst und diese sich bei radialer Aufsicht auf dem dünneren Teil des Federelementes (i) befinden.

2. Federelement gemäß Anspruch 1, **dadurch gekennzeichnet, dass** das Federelement (i) entlang der Federachse (ii) ein Hohlkörper ist.

3. Federelement gemäß Anspruch 1 oder 2, **dadurch gekennzeichnet, dass** das Elastomer Gummi und/oder Polyisocyanat-Polyadditionsprodukt ist.

4. Federelement gemäß einem der Ansprüche 1 bis 3, **dadurch gekennzeichnet, dass** die achsensymmetrische Verjüngung und/oder Erweiterung rechteckig, trapezförmig, elipsenförmige ist oder aus Mischformen dieser Einzelelemente besteht.

5. Federelement gemäß einem der Ansprüche 1 bis 4, **dadurch gekennzeichnet, dass** die Verjüngung und/oder Erweiterung in mindestens einem Enddrittel des Federelementes liegt.

6. Stoßdämpfer, die mindestens ein Federelement gemäß Anspruch 1 enthalten.

7. Fahrzeug oder Vorrichtung umfassend ein Federelement gemäß Anspruch 1.

## Claims

1. A spring element (i) which is an auxiliary spring in a motor vehicle chassis, with a thicker portion which faces the upper end 0 of the spring element, and with a thinner portion which faces the lower end U of the spring element (i), with a geometry which is substantially concentric along the spring axis (ii), comprising at least one elastomer, wherein the geometry that is substantially concentric about the spring axis (ii) comprises constrictions and/or widenings which are axially symmetrical along the spring axis and which are on the thinner part of the spring element (i) in radial view.

2. The spring element according to claim 1, wherein the spring element (i) is a hollow body along the spring axis (ii) .

3. The spring element according to claim 1 or 2, wherein the elastomer is rubber and/or polyisocyanate polyaddition product.

4. The spring element according to one of claims 1 to 3, wherein the axially symmetrical constriction and/or widening is rectangular, trapezoidal or elliptical or comprises mixed forms of these individual elements.

5. The spring element according to one of claims 1 to 4, wherein the constriction and/or widening lies in at least an end third of the spring element.

6. A shock absorber which comprises at least one spring element according to claim 1.

7. A vehicle or device comprising a spring element according to claim 1.

## Revendications

1. Élément de ressort (i) qui est un ressort complémentaire dans un châssis de véhicule automobile, comprenant une partie plus épaisse qui est tournée vers l'extrémité supérieure 0 de l'élément de ressort et une partie plus mince qui est tournée vers l'extrémité inférieure U de l'élément de ressort (i), ayant une géométrie essentiellement concentrique le long de l'axe du ressort (ii), constitué d'au moins un élastomère, **caractérisé en ce que** la géométrie essentiellement concentrique autour de l'axe du ressort (ii) comprend des rétrécissements et/ou des élargissements à symétrie axiale le long de l'axe du ressort et ceux-ci se trouvent sur la partie plus mince de l'élément de ressort (i) en vue de dessus radiale.

2. Élément de ressort selon la revendication 1, **caractérisé en ce que** l'élément de ressort (i) est un corps creux le long de l'axe du ressort (ii).

3. Élément de ressort selon la revendication 1 ou 2, **caractérisé en ce que** l'élastomère est du caoutchouc et/ou un produit de polyaddition de polyisocyanate.

4. Élément de ressort selon l'une quelconque des revendications 1 à 3, **caractérisé en ce que** le rétrécissement et/ou l'élargissement à symétrie axiale sont rectangulaires, trapézoïdaux ou elliptiques ou se composent de formes composées de ces éléments individuels.

5. Élément de ressort selon l'une quelconque des revendications 1 à 4, **caractérisé en ce que** le rétrécissement et/ou l'élargissement sont situés dans moins un tiers extrême de l'élément de ressort.

6. Amortisseur de chocs, comprenant au moins un élément de ressort selon la revendication 1.

7. Véhicule ou dispositif comprenant un élément de ressort selon la revendication 1.
